# EUROPEAN PATENT SPECIFICATION

(11) **EP 1 885 631 B1**
(45) Date of publication and mention of the grant of the patent: **27.07.2011**
(21) Application number: 06733571.1
(22) Date of filing: 18.04.2006
(51) Int. Cl.: B65G 13/00, B66F 7/08

(54) **APPARATUS FOR LIFTING AND FORWARDING OF LOGS**
VORRICHTUNG ZUM HEBEN UND WEITERLEITEN VON LOGS
APPAREIL POUR SOULEVER ET FAIRE AVANCER DES BUCHES

(30) Priority: 31.05.2005 SI 200500162
(43) Date of publication of application: 13.02.2008
(73) Proprietor: Tajfun Planina Proizvodnja Strojev, D.o.o., 3225 Planina Pri Sevnici (SI)
(72) Inventor: SPAN, Iztok, 1000 Ljubljana (SI)
(74) Representative: Borstar, Dusan
(86) International application number: PCT/SI2006/000014
(87) International publication number: WO 2007/008179

(56) References cited:
- EP-A- 1 375 409
- BE-A- 546 682
- CA-A- 900 881
- CA-A1- 2 312 104
- FR-A- 2 461 629
- US-A- 475 628

## Description

The invention belongs to the field of transport devices, which are intended for lifting, loading or unloading of loads. The invention especially relates to wood processing, namely to machines, which are intended for forwarding, transport, loading, binding, arranging and unloading of logs after unloading by cutting thereof.

In this, the purpose of the invention is to create a portable and therefore to minimal dimensions collapsible apparatus for lifting of logs from the ground level up to another desired level or axis, in which the logs are then at least longitudinally cut or split, while simultaneously by means of such apparatus each log would also have to be longitudinally i.e. along said axis forwarded towards the working area.

An apparatus for efficient loading of logs is described in CA 2,312,104. Such apparatus includes several step-like segments, which actually form a transporting structure. Said segments are arranged adjacent to each other in several groups, wherein each segment is rotated around an axis, which extends along each group i.e. transversally with respect to direction of transporting logs. Appropriate gap is available between each neighboring groups of segments, which is adapted for receipt of log, and each group of segments may be pivoted for a required angle when looking from each preceding group to each subsequent group. When the log is placed within such gap between the preceding group to each subsequent group, each preceding group is pivoted in such an extend, that the log is rolled up to the neighboring group, upon which said group is also pivoted in such extend, that the log is rolled into the gap between said group and the subsequent group. Such displacements of logs are quickly repeated, so that the logs are also rolled quickly along the apparatus and are also oriented in appropriate manner. Such apparatus is no doubt extremely efficient and is useful on any places, where a huge quantity of logs needs to be transported, which means for example in ports, storages, railway stations or in wood processing plants. From another point of view such apparatus is also no doubt pretty complicated and in particular the dimensions thereof are really huge, which normally means, that such apparatus is used exclusively as a fixed, non-portable appliance; which is unable to be displaced and used in operation on the spot i.e. in situ.

An apparatus with a bearing frame apart from the ground, which is equipped with transversally arranged rollers and a forwarding means is known from US 475 628. An apparatus for lifting and forwarding of logs is foreseen according to the invention, which comprises
- two groups of crosswise each to other arranged legs, by which in each corresponding pivot joint each leg of the first group is pivotably connected with the corresponding leg of the second group, and where each of at least majority of legs of the first group is equipped with a lever, which is pivotably attached thereto and arranged on those end portion thereof, which is faced away from the ground;
- a bearing frame, which is at the one hand pivotably connected with the end portion of legs of the second group, which is faced away from the ground, and on the other hand with said levers on the legs of the first group, wherein said frame is furthermore equipped with transversally arranged rollers as well as with at least one forwarding means; and
- a lifting unit, which is pivotably attached to the first group of legs and supported by a hydraulic transposing means, which is attached to the second group of legs.

Preferably, the legs of the first group are firmly interconnected by means of a longitudinal binding means, and the legs of the second group are firmly interconnected by means of a longitudinal binding means, while at the same time the lifting unit comprises a group of levers, the end portions of which are similar like both groups of legs interconnected by means of a longitudinal binding means. Furthermore, the end portions of the levers of the lifting unit are concave i.e. arched towards the ground. The hydraulic transposing means is preferably a hydraulic cylinder.

When taking into account a preferable embodiment, the bearing frame consists of two longitudinal beams, between which there is a group of rollers, which may be freely rotated around individual axles and extend transversally with respect to said beams, as well as of at least one forwarding means, which is driven by means of corresponding hydraulic driving means. Two forwarding means are preferably foreseen, wherein each of them is available on the belonging end portion of the bearing frame, and wherein each forwarding means comprises a chain wheel and is driven via appropriate chain by means of a hydraulic driving means, which is also equipped with a chain wheel. In addition, each forwarding means is preferably conceived as a welded assembly, which consists of at least cylindrical central portion, to which then radial outwards extending parts are firmly connected, wherein the central portion of each driving means is at least essentially tubular and wherein said radial parts are arranged in a equidistant manner in the circular direction. Still further, each radial part comprises a concave and toothed or saw-tooth articulated outward edge, which is therefore adapted for co-operation with the periphery of each log.

The invention will be described in more detail on the basis of an embodiment, which is shown in the enclosed drawing, wherein
Fig. 1 is a perspective view of an apparatus for lifting and forwarding of logs during operation;
Fig. 2 is a perspective view of an apparatus according to Fig. 1, in a collapsed state and ready for transporting thereof;

Fig. 3 is a bottom view of the apparatus according to Fig. 2; and

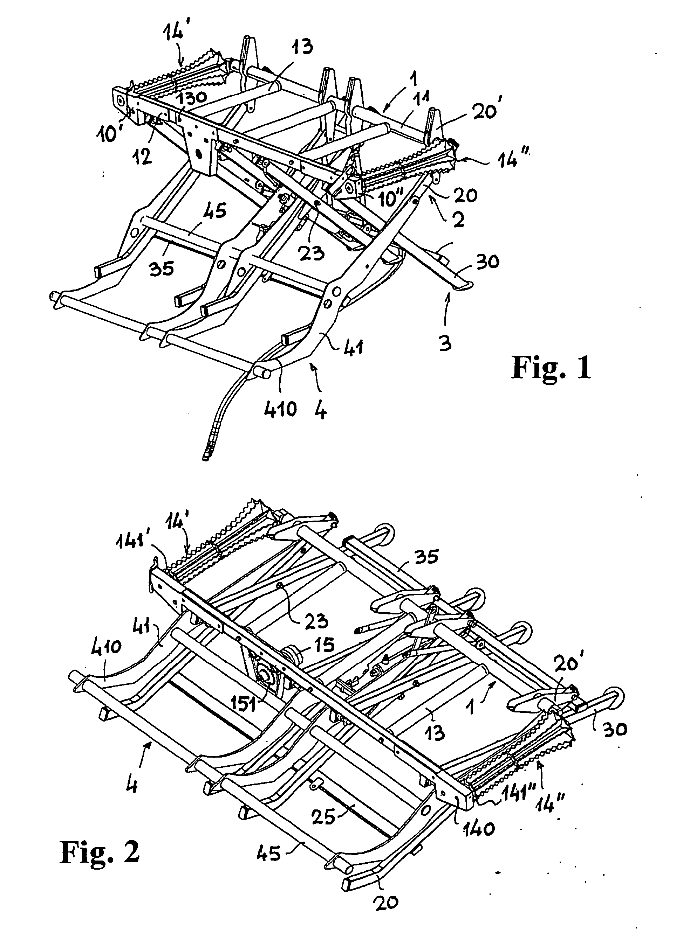

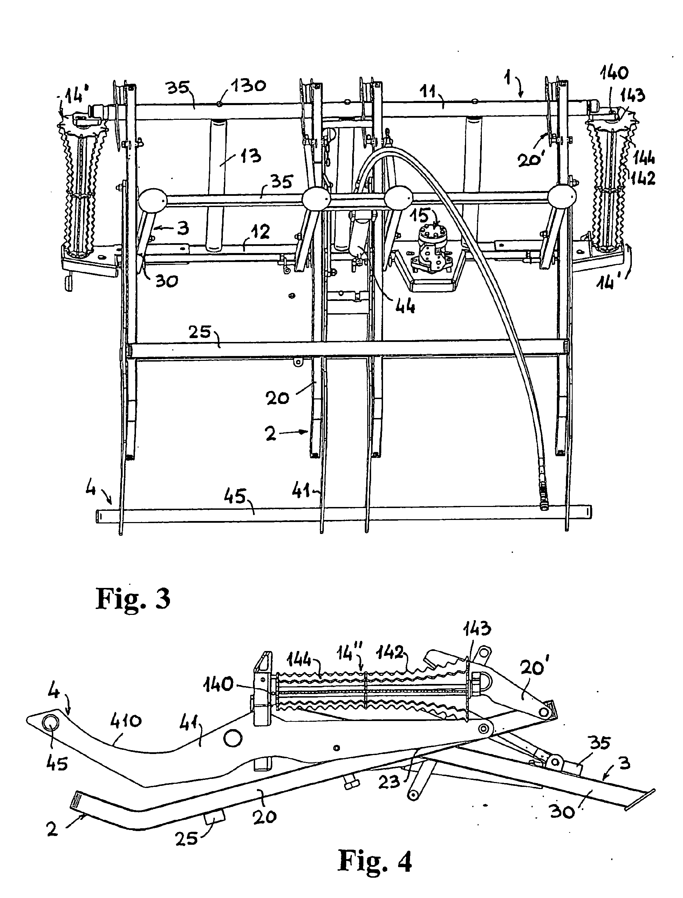

Fig. 3 is a side view of the apparatus according to Fig. 2.

The apparatus generally consists of a bearing frame 1, which is adapted for co-operation with two groups 2, 3 of crosswise arranged legs 20, 30. In the operating state of said apparatus the fame 1 is arranged in a horizontal plane and extends essentially parallel to the ground and a desired distance there-from, preferably in appropriate working level of a machine or any other appliance, to which the logs need to be forwarded. Said groups 2, 3 of legs 20, 30 are connected to each other by means of pivot joints 23.

The first group 2 consists of a desired number of legs 20, which are preferably arranged parallel to each other and apart from each other, and the second group 3 of legs 30 is arranged quite analogous. In this, pivotally interconnected and mutually co-operating legs 20, 30, which extend either one through another or one adjacent to another, may be independently i.e. each per se pivoted around their common pivot joint 23.

When bearing in mind a desired rigidity and bearing capability of the apparatus as whole, said legs 20 of the group 2 are preferably connected to each other by means of appropriate binding means 25, and the legs 30 of the second group 3 are also connected to each other by means of appropriate binding means 35.

Said first group 2 of legs 20 further comprises a group 2' of levers 20', wherein each lever 20' is pivotably connected to each belonging leg 20 in the area of the end portion on the utmost distance from the ground. In common, even more than one lever 20' may be attached to each leg 20' or only to certain desired single legs 20'.

In addition, on the end portion, which is arranged at the largest distance from the ground, a bearing frame 1 is pivotably connected to the second group 3 of legs 30, and is simultaneously also pivotably connected with the group 2' of levers 20', which are connected with the first group 2 of the legs 20.

Thanks to described concept, the apparatus is transformable from the state according to Figs. 2 to 4 into the state according to Fig. 1 and vice versa. Whenever available in the state according to Figs. 2 to 4 , the apparatus may be transported in a comfortable manner, while in the state according to Fig. 1 the apparatus is stabilized on the ground, and at the same the bearing frame 1 is firmly maintained at a desired distance apart from the ground.

Said bearing frame 1 is actually formed by longitudinal beams 11, 12, between which a desired number of transversally extending rollers 13, which may be freely rotated around corresponding axles 130. Furthermore, said frame 1 is equipped with at least one forwarding means 14', 14" arranged at each end section 10', 10" thereof.

Each forwarding means 14", 14" is driven by means of a hydraulic driving means 15, which is in this particular embodiment (Fig. 3) a hydraulic motor, which is attached to one of said longitudinal beams 11, 12 of the bearing frame 1 and moreover included into appropriate hydraulic circuit, which is hydraulically connected with corresponding driving unit of a tractor or a similar forestry working machine, which may enable both manipulating logs in forestry and also performing certain operations related to processing of wood, and in particularly transporting of apparatus according to the invention by means of appropriate trailer to each desired place.

In this particular embodiment each forwarding means 14', 14" is mounted within the bearing frame 1 in such a manner, that it can be rotated around its own axle 140, which quite analogous like by said rollers 13 extends in a transversal direction of the frame 1, and moreover includes a chain wheel 141', 141 ", which is via not shown chain connected with the chain wheel 151 of the hydraulic driving means 15. Said forwarding means 14', 14" may also be driven in any other manner, either by means of a direct co-operation of the driving means 15 with each corresponding forwarding means 14', 14", or also via an additional transmission unit, when desired or useful.

Still further, in this particular embodiment each forwarding means 14', 14" is available in form of a rotation-symmetric body having, the silhouette of which corresponds to a desired section of a truncated cone having a concave periphery surface or also to a desired section of a rotational hyperboloid or a similar solid, the silhouette of which at least approximately matches each potential silhouette of the logs, which should be put longitudinally onto the bearing frame 1 of the apparatus. In this shown embodiment each forwarding means 14', 14" is realized in a pretty simple manner, namely in form of a welded structure, consisting of a group of radial parts 144, which are equidistantly arranged in the circumferential direction, wherein each of them comprises a saw-like or toothed outwardly protruding edge 142 and is moreover welded to a tubular central portion 143, which is moreover intended for appropriate attachment of the forwarding means 14', 14" to the bearing frame 1 or also for mounting of a chain wheel 141', 141", when available.

In addition to said groups 2, 3 of legs 20, 30 and the bearing frame 1 with included rollers 13 and forwarding means 14', 14"; said apparatus also includes a lifting unit 4, which consists of a group of levers 41, which are each per se attached to said legs 20 of the first group 2, and for the purposes of achieving a desired rigidity mutually interconnected by means of a longitudinal binding means 45 in the area of their end portions 410, which are preferably concave and herewith adapted for receipt of logs. Said lifting unit 4 further includes appropriate transposing means 44, which is preferably a hydraulic cylinder, which is at the one hand connected to said second group 3 of legs 30, preferably to the longitudinal binding means 35 of the second group 3 of legs 30, and on the other hand to at least one lever 41 of the lifting unit 4. Said transposing means 44 is attached to appropriate hydraulic circuit, which is hydraulically connected with a corresponding driving unit of a tractor or any other similar working machine, which may enable both manipulating logs in forestry and also performing certain operations related to processing of wood, and in particularly transporting of apparatus according to the invention by means of appropriate trailer to each desired place.

When the apparatus according to the invention is available in the state according to Figs. 2 to 4, both groups 2, 3 of legs 20, 30 together with the end portions 410 of levers 41 are in contact with the ground, if the place of setting-up the apparatus is selected in a correct manner. As soon as the transposing means 44 is included into appropriate hydraulic circuit and a required pressure is established, said end portions 410 of the levers 41 are pressed towards the ground, upon which the second group 3 of legs 30, to which the transposing means 44 is connected, is pivoted in a direction apart from the ground. Said second group 3 of legs 30 consequently engages the first group 2 of legs 20 as well as the bearing frame 1. As soon as the bearing frame 1 is transposed to a certain distance away from the ground i.e. approximately in a horizontal plane, the legs 20, 30 of both groups 2, 3 extend crosswise to each other, by which already a certain level of stability in order to prevent tilting is assured. By further action of said transposing means 44 said levers 20' first of all reach their vertical position, but are upon that still additionally pivoted behind/over their pivot joints on the belonging legs 20 into their end position, in which any further movement in the sense of continuation of movement in the same direction is made impossible. Accordingly, the bearing frame 1 is on the one hand in the area of the longitudinal beam 11 i.e. on the side of supporting thereof by means of legs 20 of the first group 2 supported by means of said levers 20', which are even under certain additional loading securely prevented from any movement, and on the other hand in the area of the other longitudinal beam 12 by means of legs 30, which are pressed towards the ground and extend crosswise with respect to the previously mentioned legs 20 of the first group 2. When the legs 20, 30 of both groups 2, 3 are firmly supported by the ground, and the bearing frame 1 is practically arrested between said legs 20, 30, then a required pressure may be established within the hydraulic circuit, through which the lifting unit 4 is then pivoted away from the ground. Whenever said lifting unit 4 is placed on the ground, a log can be simply and easily rolled thereon, namely on the end portions 410 of the levers 41, and when the unit 4 is pivoted away from the ground, said log is lifted up to the level of the bearing frame 1 or even slightly higher, upon which the log is simply and easily rolled onto the bearing frame 1 and upon that transported by means of said rollers 13 and forwarding means 14', 14"in each desired direction and with a desired velocity alongside the bearing frame 1. Whenever the operation of the apparatus needs to be terminated, the pressure within the hydraulic circuit is eliminated, upon which the levers 20' can be moved to the opposite side of the pivot joints i.e. in a direction towards the lifting unit, upon which the apparatus is collapsed into the state according to Figs 2 to 4.

## Claims

1. Apparatus for lifting and forwarding of logs, comprising
- two groups (2, 3) of crosswise each to other arranged legs (20, 30), by which in each corresponding pivot joint (23) each leg (20) of the first group (2) is pivotably connected with the corresponding leg (30) of the second group (3), and where each of at least majority of legs (20) of the first group (2) is equipped with a lever (20'), which is pivotably attached thereto and arranged on those end portion thereof, which is faced away from the ground;
a bearing frame (1), which is at the one hand pivotably connected with the end portion of legs (30) of the second group(3), which is faced apart from the ground,
and on the other hand with said levers (20') on the legs (20) of the first group (2), wherein said frame (1) is furthermore equipped with transversally arranged rollers (13) as well as with at least one forwarding means (14', 14"); and
a lifting unit (4), which is pivotably attached to the first group (2) of legs (20) and supported by a hydraulic transposing means (44), which is attached to the second group (3) of legs (30).

2. Apparatus according to Claim 1, **characterized in that** the legs (20) of the first group (2) are firmly interconnected by means of a longitudinal binding means (25).

3. Apparatus according to Claim 1 or 2, **characterized in that** the legs (30) of the second group (3) are firmly interconnected by means of a longitudinal binding means (35).

4. Apparatus according to one of Claims 1 to 3, **characterized in that** the lifting unit (4) comprises a group of levers (41), where the end portions thereof are interconnected by means of a longitudinal binding means (45).

5. Apparatus according to Claim 4, **characterized in that** the end portions (410) of the levers (41) of the lifting unit (4) are concave i.e. arched towards the ground.

6. Apparatus according to one of the preceding Claims, **characterized in that** the hydraulic transposing means (44) is a hydraulic cylinder.

7. Apparatus according to one of the preceding Claims, **characterized in that** the bearing frame (1) consists of two longitudinal beams (11, 12), between which a a group of freely around individual axles (130) rotated rollers (13) is foreseen, which extend transversally with respect to said beams (11, 12), as well as of at least one forwarding means (14', 14"), which is driven by means of adequate hydraulic driving means (15).

8. Apparatus according to Claim 7, **characterized in that** two forwarding means (14', 14") are foreseen, where each of them is available on the belonging end portion (10', 10") of the bearing frame (1).

9. Apparatus according to Claim 8, **characterized in that** each forwarding means (14', 14") comprises a chain wheel (142', 142") and is driven via appropriate chain by means of a hydraulic driving means (15), which is also equipped with a chain wheel (151).

10. Apparatus according to Claim 8 or 9, **characterized in that** the forwarding means (14', 14") is conceived as a welded assembly, which consists of at least cylindrical central portion (143), to which then radial outwards extending parts (144) are firmly connected.

11. Apparatus according to Claim 10, **characterized in that** the central portion (143) of each forwarding means (14', 14") is at least essentially tubular and that the radial parts (144) are arranged in a equidistant manner in the circular direction.

12. Apparatus according to Claim 11, **characterized in that** each radial part (144) comprises a concave and toothed or saw-tooth articulated outward edge (142), which is therefore adapted for co-operation with the periphery of each log.

## Patentansprüche

1. Vorrichtung zum Heben und Fördern von Holzstämmen, umfassend:
- zwei Gruppen (2, 3) von kreuzweise zueinander angeordneten Schenkeln (20, 30), wobei bei jedem entsprechenden Drehgelenk (23) jeder Schenkel (20) der ersten Gruppe (2) schwenkbar mit dem entsprechenden Schenkel (30) der zweiten Gruppe (3) verbunden ist, und wobei jeder von zumindest der Mehrzahl der Schenkel (20) der ersten Gruppe (2) mit einem Hebel (20') versehen ist, welcher schwenkbar daran befestigt ist und an denjenigem Endabschnitt davon angeordnet ist, welcher vom Boden abgewandt ist;
- einen Tragrahmen (1), welcher einerseits mit dem vom Boden abgewandten Endabschnitt der Schenkel (30) der zweiten Gruppe (3) und andererseits mit den Hebeln (20') auf den Schenkeln (20) der ersten Gruppe (2) schwenkbar verbunden ist, wobei der Rahmen (1) ferner mit quer angeordneten Rollen (13) sowie mit mindestens einem Fördermittel (14', 14") versehen ist; und
- eine Hebeeinheit (4), welche schwenkbar an der ersten Gruppe (2) der Schenkel (20) befestigt ist und von einem hydraulischen Verschiebungsmittel (44) getragen ist, welches an der zweiten Gruppe (3) der Schenkel (30) befestigt ist.

2. Vorrichtung nach Anspruch 1, **dadurch gekennzeichnet, dass** die Schenkel (20) der ersten Gruppe (2) mittels eines längs verlaufenden Verbindungsmittels (25) fest miteinander verbunden sind.

3. Vorrichtung nach Anspruch 1 oder 2, **dadurch gekennzeichnet, dass** die Schenkel (30) der zweiten Gruppe (3) mittels eines längs verlaufenden Verbindungsmittels (35) fest miteinander verbunden sind.

4. Vorrichtung nach einem der Ansprüche 1 bis 3, **dadurch gekennzeichnet, dass** die Hebeeinheit (4) eine Gruppe von Hebeln (41) umfasst, wobei die Endabschnitte davon mittels eines längs verlaufenden Verbindungsmittels (45) miteinander verbunden sind.

5. Vorrichtung nach Anspruch 4, **dadurch gekennzeichnet, dass** die Endabschnitte (410) der Hebel (41) der Hebeeinheit (4) zum Boden hin konkav, d. h. bogenförmig, sind.

6. Vorrichtung nach einem der vorangehenden Ansprüche, **dadurch gekennzeichnet, dass** das hydraulische Verschiebungsmittel (44) ein Hydraulikzylinder ist.

7. Vorrichtung nach einem der vorangehenden Ansprüche, **dadurch gekennzeichnet, dass** der Tragrahmen (1) aus zwei Längsträgern (11, 12), zwischen welchen eine Gruppe von frei um eigene Achsen (130) gedrehten Rollen (13) vorgesehen ist, welche sich quer zu den Trägern (11, 12) erstrecken, sowie aus mindestens einem Fördermittel (14', 14"), welches mittels eines entsprechenden hydraulischen Antriebsmittels (15) angetrieben wird, besteht.

8. Vorrichtung nach Anspruch 7, **dadurch gekennzeichnet, dass** zwei Fördermittel (14', 14") vorgesehen sind, wobei jedes davon auf dem zugehörigen Endabschnitt (10', 10") des Tragrahmens (1) zur Verfügung steht.

9. Vorrichtung nach Anspruch 8, **dadurch gekennzeichnet, dass** jedes Fördermittel (14', 14") ein Kettenrad (142', 142") umfasst und über eine entsprechende Kette mittels eines hydraulischen Antriebsmittels (15) angetrieben wird, welches ebenfalls mit einem Kettenrad (151) versehen ist.

10. Vorrichtung nach Anspruch 8 oder 9, **dadurch gekennzeichnet, dass** das Fördermittel (14', 14") als verschweißte Anordnung vorgesehen ist, welche aus einem zumindest zylindrischen Mittelabschnitt (143) besteht, mit welchem dann radial nach außen verlaufende Teile (144) fest verbunden sind.

11. Vorrichtung nach Anspruch 10, **dadurch gekennzeichnet, dass** der Mittelabschnitt (143) jedes Fördermittels (14', 14") zumindest im Wesentlichen rohrförmig ist und dass die radialen Teile (144) in kreisförmiger Richtung gleich beabstandet angeordnet sind.

12. Vorrichtung nach Anspruch 11, **dadurch gekennzeichnet, dass** jedes radiale Teil (144) eine konkave und gezahnte oder sägezahnförmige gelenkig gelagerte Außenkante (142) umfasst, welche demzufolge an das Zusammenwirken mit dem Rand jedes Holzstamms angepasst ist.

## Revendications

1. Appareil pour lever et faire avancer des bûches, comprenant
- deux groupes (2, 3) de pieds (20, 30) agencés de manière à se croiser l'un l'autre, dans lequel, dans chaque articulation pivotante (23) correspondante, chaque pied (20) du premier groupe (2) est connecté de façon pivotante avec le pied (30) correspondant du deuxième groupe (3), et où chacun d'au moins une majorité de pieds (20) du premier groupe (2) est équipé avec un levier (20), qui est fixé de façon pivotante à celui-ci et agencé sur la partie d'extrémité de celui-ci qui fait face à l'opposé du sol ;
- un cadre support (1), qui est d'une part connecté de façon pivotante avec la partie d'extrémité des pieds (30) du deuxième groupe (3), qui fait face à l'opposé du sol, et d'autre part avec lesdits leviers (20') sur les pieds (20) du premier groupe (2), dans lequel ledit cadre (1) est en outre équipé de rouleaux (13) agencés transversalement ainsi que d'au moins un moyen d'avancée (14', 14") ; et
- une unité de levage (4), qui est fixée de façon pivotante au premier groupe (2) de pieds (20) et supportée par un moyen de transposition hydraulique (44), qui est fixé au deuxième groupe (3) de pieds (30).

2. Appareil selon la revendication 1, **caractérisé en ce que** les pieds (20) du premier groupe (2) sont fermement interconnectés au moyen d'un moyen de liaison longitudinal (25).

3. Appareil selon la revendication 1 ou 2, **caractérisé en ce que** les pieds (30) du deuxième groupe (3) sont fermement interconnectés au moyen d'un moyen de liaison longitudinal (35).

4. Appareil selon l'une des revendications 1 à 3, **caractérisé en ce que** l'unité de levage (4) comprend un groupe de leviers (41), où les parties d'extrémité de ceux-ci sont interconnectées au moyen d'un moyen de liaison longitudinal (45).

5. Appareil selon la revendication 4, **caractérisé en ce que** les parties d'extrémité (410) des leviers (41) de l'unité de levage (4) sont concaves, à savoir en arc de cercle vers le sol.

6. Appareil selon l'une des revendications précédentes, **caractérisé en ce que** le moyen de transposition hydraulique (44) est un cylindre hydraulique.

7. Appareil selon l'une des revendications précédentes, **caractérisé en ce que** le cadre support (1) consiste en deux profilés (11, 12) longitudinaux, entre lesquels un groupe de rouleaux (13) mis librement en rotation autour d'axes individuels (130) sont prévus, qui s'étendent transversalement par rapport auxdits profilés (11, 12), ainsi qu'en au moins un moyen d'avancée (14', 14"), qui est entraîné au moyen d'un moyen d'entraînement hydraulique (15) approprié.

8. Appareil selon la revendication 7, **caractérisé en ce que** deux moyens d'avancée (14', 14") sont prévus, où chacun d'entre eux est disponible sur la partie d'extrémité (10', 10") correspondante du cadre support (1).

9. Appareil selon la revendication 8, **caractérisé en ce que** chaque moyen d'avancée (14', 14") comprend une roue de chaîne (142', 142") et est entraîné par l'intermédiaire d'une chaîne appropriée au moyen d'un moyen d'entraînement hydraulique (15), qui est également équipé d'une roue de chaîne (151).

10. Appareil selon la revendication 8 ou 9, **caractérisé en ce que** le moyen d'avancée (14', 14") est conçu comme un ensemble soudé, qui consiste en au moins une partie centrale (143) cylindrique, à laquelle, ensuite, des parties radiales (144) s'étendant vers l'extérieur sont fermement connectées.

11. Appareil selon la revendication 10, **caractérisé en ce que** la partie centrale (143) de chaque moyen d'avancée (14', 14") est au moins essentiellement tubulaire et **en ce que** les parties radiales (144) sont agencées d'une manière équidistante dans le sens circulaire.

12. Appareil selon la revendication 11, **caractérisé en ce que** chaque partie radiale (144) comprend un bord extérieur concave et denté ou articulé en dents de scie (142), qui est donc adapté à une coopération avec la périphérie de chaque bûche.
